# EUROPEAN PATENT APPLICATION

(11) **EP 4 825 637 A1**
(43) Date of publication of application: **21.10.2026**
(21) Application number: 25170671.9
(22) Date of filing: 15.04.2025
(51) Int. Cl.: B60L 3/10, B60K 28/16, B60L 3/12, B60L 15/20, B60T 8/175, B60W 30/18

(54) **SIMPLIFIED SPIN CONTROL FOR VEHICLES WITH DIFFERENTLY ACTUATED WHEELS**

(71) Applicant: VOLVO CAR CORPORATION, 405 31 Göteborg (SE)
(72) Inventor: MOUNZER, Raid, 433 64 PARTILLE (SE); RIIKONEN, Mikael, 426 51 VÄSTRA FRÖLUNDA (SE)
(74) Representative: Kransell & Wennborg KB

(57) **Abstract**

A computer-implemented method for wheel spin control in a vehicle (102) comprising a powertrain (104) with at least one electric machine (106) configured to provide propulsion power to a first subset (108) of wheels (108a,b) of the vehicle, the method comprising: estimating (S102), by processing circuitry (116) of a computer system (100), within a time duration (120), a vehicle speed (121) based on an effective wheel speed (Ef) associated with a second subset (110) of wheels (110a,b) of the vehicle, the second subset (110) of wheels (110a,b) subject to less torque variation compared to the first subset (108) of wheels (108a,b) in the time duration, determining (S105), by the processing circuitry (116), a speed criterion (124) based on the estimated vehicle speed (121) and an offset speed (122), and providing (S106), by the processing circuitry (116), a control instruction (C) to the electric machine (106) to limit an output torque to the first subset (108) of wheels (108a,b) according to the determined speed criterion.

## Description

### TECHNICAL FIELD

The present disclosure relates to a computer-implemented method for wheel spin control in a vehicle. The present disclosure further relates to a computer system, to a vehicle, to a computer program product, and to a non-transitory computer-readable storage medium.

### BACKGROUND

For wheels connected to a propulsion actuator, excessive wheel slip which negatively affect vehicle stability or steerability might occur when the corresponding actuator applies excessive propulsion torque on the wheel. Conventional traction control systems can manage wheel spin by limiting the output engine torque. However, the effectiveness of wheel spin control relies to some extent on the responsiveness of the torque control. This becomes even more prominent for electric actuators due to their ability to build up torque on the wheels faster than the traditional internal combustion engines.

### SUMMARY

In general, the disclosed subject matter relates to improved wheel spin control. In particular, the disclosed subject matter provides for determining instructions to limit an output torque of an electric machine of a vehicle in a more efficient manner with reduced delays.

According to a first aspect of the disclosure, there is provided a computer-implemented method for wheel spin control in a vehicle comprising a powertrain with at least one electric machine configured to provide propulsion power to a first subset of wheels of the vehicle, the method comprising: estimating, by processing circuitry of a computer system, within a time duration, a vehicle speed based on an effective wheel speed associated with a second subset of wheels of the vehicle, the second subset of wheels subject to less torque variation compared to the first subset of wheels in the time duration, determining, by the processing circuitry, a speed criterion based on the estimated speed and an offset speed, and providing, by the processing circuitry, a control instruction to the electric machine to limit an output torque to the first subset of wheels according to the determined speed criterion.

A technical problem addressed by the disclosed subject matter relates to managing the output torque of electric machines to avoid excessive wheel slip that may lead to vehicle instability. Electric machines tend to have high responsiveness which enables fast build-up of torque on the wheels. If the responsiveness of limiting the output torque is not fast enough, the vehicle may suffer from instability and/or steerability issues.

The present disclosure at least partly addresses the above and other issues by using a simplified vehicle speed estimation based on an effective wheel speed associated with a second subset of wheels of the vehicle which are subject to less torque responsiveness compared to the first subset of wheels propelled by the electric machine.

The suggested approach does not rely on the previous more complex calculations of the vehicle speed, often involving multiple electronic control units or vehicle systems, which allows for quicker response of the wheel spin control with the herein disclosed examples. It may further allow for the processing circuitry to be placed closer to the electric machine which reduces delays in communication with the electric machine, further improving responsiveness.

The effective wheel speed may be a value measured directly at the wheel or estimated based on a rotational component coupled thereto, such as a drive shaft or an actuator for the wheels.

The offset speed is a value that may be combined with the estimated speed of the vehicle to determine a speed criterion that allows acceleration, or deceleration, without risking excessive wheel slip, e.g., slip that may cause instability and/or steerability issues. For example, the offset speed may be added or subtracted, depending on the driving scenario, to the estimated speed of the vehicle to determine the speed criterion that allow for reasonable acceleration or deceleration without risking excessive slip.

The speed criterion may be implemented in various ways such as being a threshold speed, a speed limit, a speed range, an average speed over the time duration, etc. The speed criterion may be determined in an algorithm using the estimated speed and the offset speed as inputs. That is, the control instruction may instruct the electric machine to limit an allowed torque according to the target levels, such that the vehicle does not exceed the threshold speed or speed limit, to maintain within a speed range, or to not exceed the average speed over a time duration.

Wheel slip in vehicle dynamics is a relative motion between the tyre of the vehicle and the road. Longitudinal slip is the primary type of slip addressed in this disclosure, although lateral slip may in some cases be partly addressed too. Longitudinal slip refers to the difference between a wheel's rotational speed and the actual speed of the vehicle along the longitudinal direction of travel, typically occurring during acceleration or braking.

In one example, the offset speed may depend on the present driving conditions. Advantageously, this allows for better tailoring the offset speed to account for the present situation of the vehicle which will affect the tendency of wheel slip. The driving conditions may include one or more of the estimated speed, measured accelerations and estimated friction of the wheels. Friction estimation can be calculated from measured accelerations. Friction may also be estimated with a combination of wheel torques and speeds, and wheel accelerations. Additional parameter that may be part of the driving conditions include vehicle motion parameters such as one of more of yaw rate, curvature, steering, over-/under-steering tendency.

In other example, the offset speed may be fixed.

In one example, the method may comprise: acquiring, by the processing circuitry, an allowable wheel slip amount based on the present driving conditions, and determining, by the processing circuitry, the offset speed based on the allowable wheel slip amount. By relating the offset speed to the allowable wheel slip, an accurate limit output torque can be determined, directly reflecting the allowable wheel slip.

In one example, the processing circuitry may be comprised in one of an inverter of the electric machine or an engine control module connected to the electric machine. Advantageously, the less complex calculations of for example the vehicle speed allows the processing circuitry to be located as close as possible to the electric machine thereby minimizing time delays in the communication with the electric machine.

In one example, the powertrain may comprise an actuator configured to provide propulsion power to the second subset of wheels, wherein the torque responsiveness of the electric machine may be larger than the torque responsiveness of the actuator, during the time duration. The actuator may be an internal combustion engine, whereby the vehicle is a hybrid vehicle.

In some examples, the second subset of wheels may be non-propelled in a first driving mode of the vehicle and is propelled by the actuator in a second driving mode of the vehicle. For example, in an ECO-mode the actuator may be disabled or be decoupled from the second subset of wheels and be enabled or coupled to the second subset of wheels in a Power mode.

In some examples, the torque responsiveness of the actuator may be variable depending on a driving mode of the vehicle.

In some examples, the second subset of wheels may be on a non-propelled axle of the vehicle.

In one example, the method may comprise determining, by the processing circuitry, that the vehicle is in an acceleration scenario, wherein the offset speed is set such that the speed criterion allows acceleration of the vehicle during the time duration. In other words, the offset is advantageously set such that the vehicle is allowed to accelerate, but not excessively to cause too high wheel slip, for example by setting the speed criterion as being a sum of the offset speed and the estimated speed.

In one example, the method may comprise determining, by the processing circuitry, that the vehicle is in a deceleration scenario, wherein the offset speed is set such that the speed criterion limits the regenerative braking torque on the first subset of wheels. In other words, the offset is advantageously set such that the vehicle is allowed to deaccelerate by the regenerative charging but not excessively to cause too high wheel slip, for example by setting the speed criterion as being a difference between the estimated speed and the offset speed.

However, it is envisaged that both acceleration and deceleration targets can always be determined and followed continuously regardless of if the vehicle is accelerating, decelerating or rolling.

In one example, the method may be performed in parallel with operation of a propulsion torque limitation system operating in brake control module based on inertial measurement unit data, wheel speed data, and driving conditions data. That is, the method may advantageously run in parallel with a traditional torque limiting system.

In examples, the wheel speed of the second subset of wheels may be measured from a wheel speed sensor or determined based on an operating speed of an actuator connected to the second subset of wheels.

According to a second aspect of the disclosure, there is provided a computer system for wheel spin control in a vehicle comprising a powertrain with at least one electric machine configured to provide propulsion power to a first subset of wheels of the vehicle, the computer system comprising processing circuitry configured to: estimate, within a time duration, a vehicle speed based on an effective wheel speed associated with a second subset of wheels of the vehicle, the second subset of wheels subject to less torque variation compared to the first subset of wheels in the time duration, determine a speed criterion based on the estimated speed and an offset speed, and provide a control instruction to the electric machine to limit an output torque to the first subset of wheels according to the determined speed criterion.

Effects, features, and examples of this second aspect are highly analogous with those described with reference to the first aspect.

There is further provided, in one example, a vehicle comprising: a powertrain with an electric machine coupled to a first subset of wheels of the vehicle, a second subset of wheels subject to less torque variation compared to the first subset of wheels, and a computer system according to any examples of the second aspect.

There is further provided, in one example, a computer program product comprising program code for performing, when executed by the processing circuitry, the method of any of the herein disclosed examples.

There is further provided, in one example, a non-transitory computer-readable storage medium comprising instructions, which when executed by the processing circuitry, cause the processing circuitry to perform the method of any of the herein disclosed examples.

Further features of, and advantages with, examples of the present disclosure will become apparent when studying the appended claims and the following description. The skilled person realize that different features of the present disclosure may be combined to create examples other than those described in the following, without departing from the scope of the present disclosure.

### BRIEF DESCRIPTION OF THE DRAWINGS

These and other aspects of the present invention will now be described in more detail, with reference to the appended drawings showing examples, wherein:
FIG. 1 is a box diagram of a computer system according to examples of the present disclosure.
FIG. 2 is a box diagram of a computer system according to examples of the present disclosure.
FIG. 3 is a schematic of a vehicle according to examples of the present disclosure.
FIG. 4 is a flow-chart of method steps for wheel spin control according to examples of the present disclosure.
FIG. 5 is a flow-chart of method steps for wheel spin control according to examples of the present disclosure.
FIG. 6 is a flow-chart of method steps for wheel spin control according to examples of the present disclosure.
FIG. 7 is a schematic diagram of a computer system for implementing examples disclosed herein.

### DETAILED DESCRIPTION

In the present detailed description, various embodiments of the present disclosure are herein described with reference to specific implementations. In describing examples, specific terminology is employed for the sake of clarity. However, the present disclosure is not intended to be limited to the specific terminology so selected. While specific examples are discussed, it should be understood that this is done for illustration purposes only. A person skilled in the relevant art will recognize that other components and configurations can be used without parting from the scope of the disclosure.

In typical systems and algorithms for limiting torque to avoid wheel spin, several modules and steps are involved. For example, wheel speed and inertial measurement unit (IMU) sensors information for speed estimation and driving conditions identification, brake control module for speed estimation and coordination with brake traction control, and propulsion controller to limit the allowed torque according to determined target levels. Although, this is a promising approach, there is room for improvement. For example, the involvement of multiple modules and electronic control units (ECUs) means that significant delays might occur from the instant when the driving scenario takes place to the instant when the desired limitation from the propulsion controller is reached. This is especially prominent for vehicles with wheels propelled by electric motors due to the quicker torque buildup on the wheels compared to e.g., wheels propelled by internal combustion engines, which means a higher slip level can be reached before the desired propulsion torque limitation is reached.

The examples provided herein address the drawbacks of prior art by suggesting a simpler speed estimation that allows for reducing the time delays. In this way, wheel spin can be better controlled and the vehicle stability and steerability is improved.

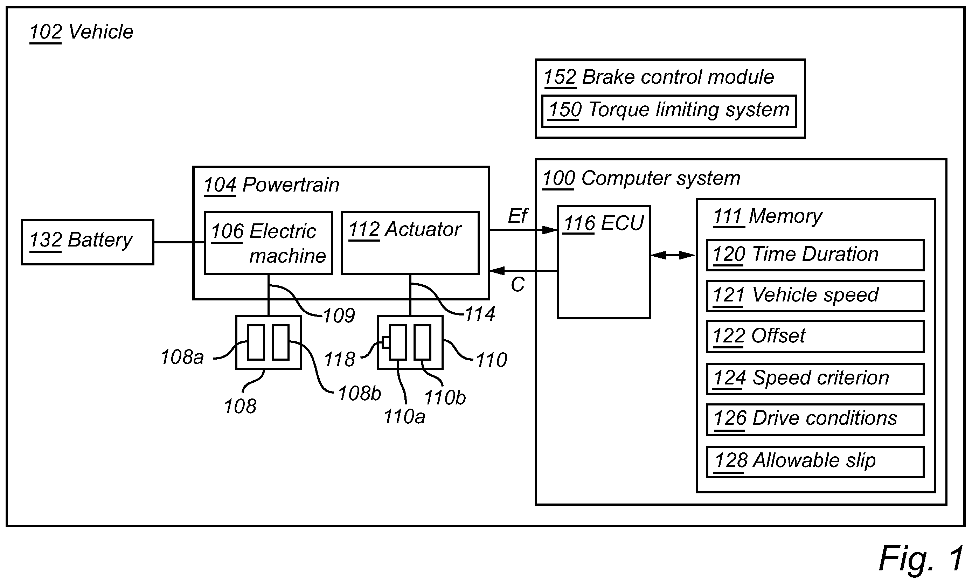

FIG. 1 is a box diagram of a computer system 100 according to an example. The computer system 100 is configured for wheel spin control in a vehicle 102. The vehicle 102 comprises a powertrain 104 with at least one electric machine 106 configured to provide propulsion power to a first subset 108 of wheels 108a-b of the vehicle 102. The electric machine may be powered by a propulsion battery 132 of the vehicle, or for example by a fuel cell. The electric machine 106 is coupled to the first subset 108 of wheels 108a-b via drive axle 109. The computer system further comprises a digital memory 111.

The vehicle 102 further comprises a second subset 110 of wheels 110a-b. The second subset of wheels may be unpropelled, that is, no actuator or engine is coupled to the second subset of wheels. More precisely, the second subset of wheels may be on a non-propelled axle of the vehicle 102. Generally, the second subset 110 of wheels 110a-b is subject to less torque variation compared to the first subset 108 of wheels 108a-b.

In other examples, the powertrain 104 comprises an actuator 112 configured to provide propulsion power to the second subset 110 of wheels 110a-b. The torque responsiveness of the electric machine 106 is higher than the torque responsiveness of the actuator 112 during a given time duration. In some examples, the actuator 112 is an internal combustion engine.

In other examples, the axle 114 of the second subset 110 of wheels 110a,b is non-propelled in a first driving mode of the vehicle 102 and is propelled by the actuator 112 in a second driving mode of the vehicle 102. In other words, the torque responsiveness of the actuator 112 is variable depending on a driving mode of the vehicle 102. For example, the vehicle may have an ECO mode and a Power mode, whereby the torque responsiveness of the actuator 112 is higher in the Power mode than in the ECO mode. In fact, the actuator may be decoupled from the axle 114 in the less responsive mode, effectively making the axle 114 non-propelled. Regardless, during the time duration referred to herein, the second subset 110 of wheels 110a-b is subject to less torque variation compared to the first subset 108 of wheels 108a-b.

The computer system 100 comprises processing circuitry 116 configured to estimate, within a time duration 120, a vehicle speed 121 based on an effective wheel speed, Ef, associated with the second subset 110 of wheels 110a-b of the vehicle 102. As discussed, the second subset 110 of wheels 110a-b is subject to less torque variation compared to the first subset 108 of wheels 108a-b in the time duration 120.

The time duration 120 is during which the first subset 108 of wheels 108a-b experiences high torque variability or change. The second subset 110 of wheels 110a-b experiences less or no torque variability during the same time duration 120. The time duration 120 may be a sample time period for the torque limiting procedure described herein. The time duration is sufficient to detect wheel dynamics such as slip. The time duration is short enough such that the output torque to the first subset 108 of wheels 108a,b is limited in time before potential instability issues occur.

The term "effective wheel speed" refers to a parameter representative of the rotational speed of a wheel. This parameter may correspond to a direct measurement of the wheel's rotational speed or to an indirect estimation based on measurements taken from components mechanically coupled to the wheel, such as an electric motor, drive shaft, axle, or gearbox. The effective wheel speed may be derived using sensor data, control signals, or a combination thereof, and may incorporate signal processing or estimation techniques (e.g., filtering, observer models, or inferred values from torque and acceleration).

The wheel speed of the second subset 110 of wheels 110a-b may be measured from a wheel speed sensor 118 or determined based on an operating speed of the actuator 112 connected to the second subset 110 of wheels 110a-b.

The processing circuitry 116 is configured to determine a speed criterion 124 based on the estimated speed 121 and an offset speed 122.

Furthermore, the processing circuitry 116 is configured to provide a control instruction, C, to the electric machine 106 to limit an output torque to the first subset 108 of wheels 108a-b according to the determined speed criterion 124.

The offset speed 122 may be a fixed value.

However, in other examples, the offset speed is a variable offset value that depends on at least one other parameter. Generally, the offset speed 122 depends on the present driving conditions 126.

The present driving conditions relate to for example the estimated speed, or the present acceleration or deceleration of the vehicle. In further example, the driving conditions may alternatively or additionally refer to one or more of friction conditions between the wheels and the ground, yaw rate of the vehicle, curvature, steering, or over-/under-steering tendency. For example, lower friction may lead to lower offsets. Oversteering may lead to less offset on rear axle where the high responsive electric machine is coupled.

Friction may be estimated with a combination of wheel torques and speeds, and wheel accelerations.

The processing circuitry 116 may be being configured to acquire an allowable wheel slip amount 128 based on the present driving conditions 126. The allowable wheel slip may set a limit for at what slip the vehicle suffers from instability and/or reduced stability. This depends on the present driving conditions 126. The processing circuitry 116 may determine the offset speed 122 based on the allowable wheel slip amount 128. The allowable wheel slip amount 128 may be an allowable longitudinal wheel slip amount. A longitudinal wheel slip is calculated based on a difference between the speed of the tyre at the contact surface with the road and the speed of the vehicle.

From the allowable slip, an allowable vehicle velocity can be found and be compared to the present velocity of the vehicle, and from this comparison the offset can be determined. For example, as a difference between the allowable velocity and the present velocity of the vehicle.

The vehicle 102 can be in different scenarios where the speed criterion may be adjusted accordingly. For example, the processing circuitry 116 may determine that the vehicle is in or is approaching an acceleration scenario. In such case, it is desirable to allow reasonable acceleration. Thus, the offset speed is set such that the speed criterion allows acceleration of the vehicle during the time duration but without causing wheel slipping.

As another example, the processing circuitry may determine that the vehicle is in a deceleration scenario. That is, the vehicle is slowing down such that regenerative braking and charging of the electrical energy storage 132 via the electric machine 106 is possible. In this case, the offset speed 122 is set such that the speed criterion limits the regenerative braking torque on the first subset 108 of wheels 108a-b. That is, the regenerative braking should not be excessive to cause wheel slipping.

Generally, the electric machine can operate as motor to generate propulsion torque and as a generator to generate braking torque for charging the battery.

It is envisaged that both acceleration and deceleration offsets can be provided and followed continuously and simultaneously regardless of if the vehicle is accelerating, decelerating or rolling.

The computer system 100 may set different offsets for propulsion and regeneration limitations.

Acceleration can be determined based on a combination of the sign of the vehicle speed and the sign of the applied/requested torque. It is also possible to distinguish the acceleration and deceleration based on the derivative of the absolute value of estimated vehicle speed, where i.e., positive derivative means acceleration, negative derivative means deceleration.

Optionally, the computer system 100 may be operative in parallel with a propulsion torque limitation system 150 operating in a brake control module 152 based on inertial measurement unit data, wheel speed data, and driving conditions data.

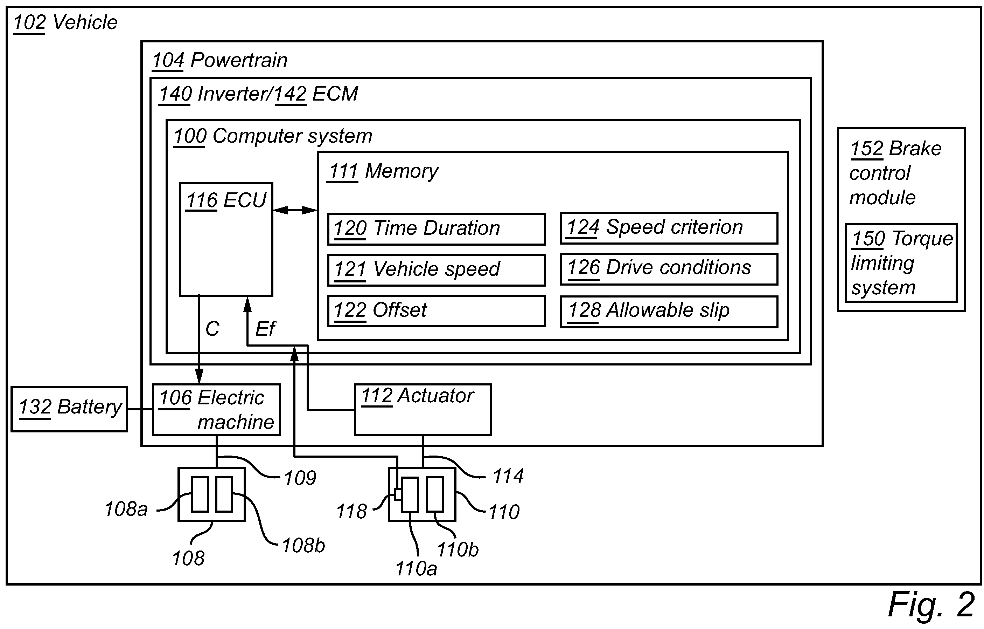

FIG. 2 illustrates another example, referred to as a preferred example. Here, the processing circuitry 116, and optionally also the memory 111, is comprised in one of an inverter 140 for or of the electric machine 106 or an engine control module, ECM, 142 connected to the electric machine 106.

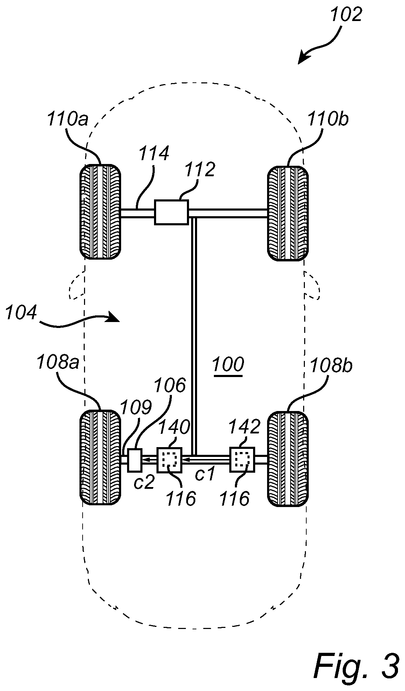

FIG. 3 is a schematic of a vehicle 102 such as a car comprising a powertrain 104 with an electric machine 106 coupled to a first subset of wheels 108a,b of the vehicle 102. The vehicle 102 further comprises a second subset of wheels 110a,b subject to less torque variation compared to the first subset of wheels 108a,b. The second subset 110 of wheels 110a,b may be propelled by an actuator 112, or be non-propelled. The vehicle 102 comprises the computer system 100, however, the processing circuitry 116 may be arranged in one of the inverter 140 or the ECM 142, as close as possible to the electric machine 106 coupled to the axle 109. Fig. 3 illustrates both options, that is, the processing circuitry 116 may be included in either the inverter 140 or the ECM 142.

Furthermore, the processing circuitry 116 may be split between the inverter 140 and the ECM 142. For example, the vehicle speed 121 may be determined based on the effective wheel speed by processing circuitry 116 in the ECM 142, and the offset 122 may be determined and included by processing circuitry 116 in the inverter 140.

The ECM 142 may instruct, by providing controls signal *c1,* the inverter 140 of torque and speed limits, whereby the inverter 140 controls, by providing controls signal c2, the torque output of the electric machine 106.

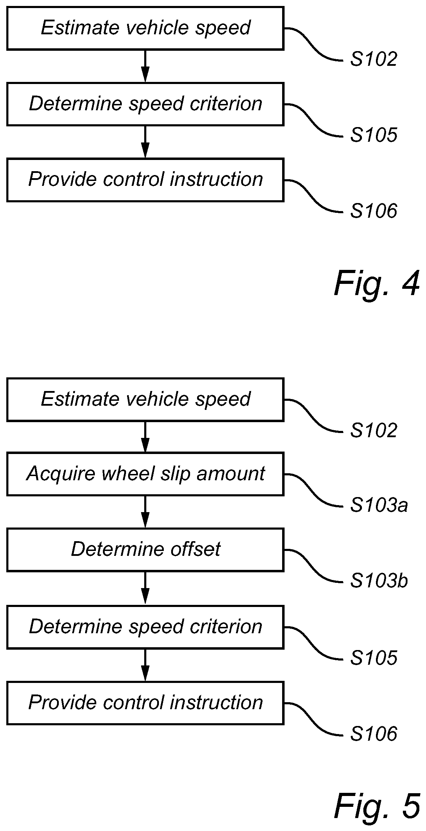

FIG. 4 is a flow-chart of method steps for wheel spin control in a vehicle according to examples of the present disclosure. The vehicle 102 comprising a powertrain 104 with at least one electric machine 106 configured to provide propulsion power to a first subset 108 of wheels 108a-b of the vehicle 102.

In step S102, estimating, by processing circuitry 116 of a computer system 100, within a time duration 120, a vehicle speed 121 based on an effective wheel speed, Ef, associated with a second subset 110 of wheels 110a,b of the vehicle 102. The second subset 110 of wheels 110a,b subject to less torque variation compared to the first subset 108 of wheels 108a,b in the time duration.

In step S105, determining, by the processing circuitry 116, a speed criterion 124 based on the estimated speed and an offset speed 122.

In step S106, providing, by the processing circuitry 116, a control instruction C to the electric machine 106 to limit an output torque to the first subset 108 of wheels 108a,b according to the determined speed criterion 124.

FIG. 5 is a flow-chart of method steps for wheel spin control in a vehicle according to examples of the present disclosure.

In addition to the steps S102, S105, S106 described in relation to fig 4, the method comprises step S103a of acquiring, by the processing circuitry 116, an allowable wheel slip amount 128 based on the present driving conditions 126. The present drive conditions 126 are determined or acquired prior to step S103a. In step S103b, determining, by the processing circuitry 116, the offset speed 122 based on the acquired allowable wheel slip amount 128.

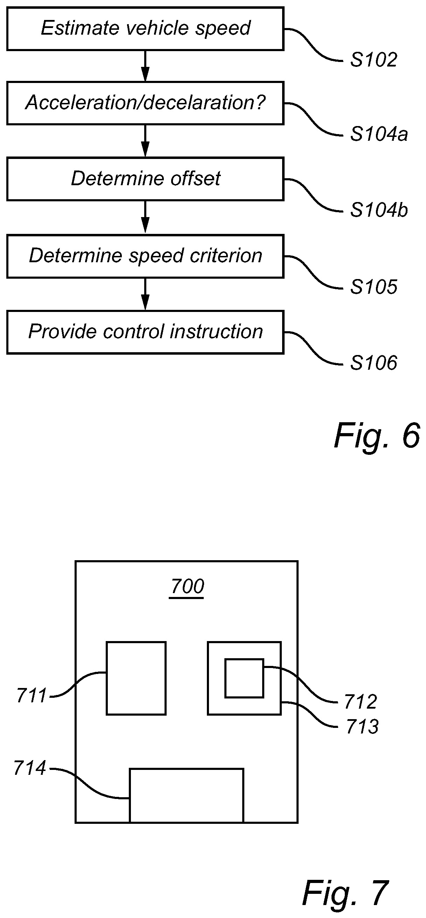

FIG. 6 is a flow-chart of method steps for wheel spin control in a vehicle according to examples of the present disclosure.

The method further includes step S104a to determining, by the processing circuitry, that the vehicle is in an acceleration scenario, or determining, that the vehicle is in a deceleration scenario.

If the vehicle 102 is in an acceleration scenario, the offset speed in step S104b is set such that the speed criterion allows acceleration of the vehicle during the time duration.

If the vehicle is in a deceleration scenario, the offset speed in step S104b is set such that the speed criterion limits the regenerative braking torque on the first subset of wheels.

Both acceleration and deceleration targets can be simultaneously determined and provided by the processing circuitry, such that the electric machine simultaneously follows both the acceleration and deceleration speed criteria.

FIG. 7 illustrates a computer system 700 according to an embodiment. The steps of a method performed by the computer system 700 are in practice performed by processing circuitry 711 embodied in the form of one or more microprocessors arranged to execute a computer program 712 downloaded to a non-transitory computer readable storage medium 713 associated with the microprocessor, such as a Random Access Memory (RAM), a Flash memory or a hard disk drive. The processing circuitry 711 is arranged to cause the computer system 700 to carry out the method according to embodiments when the appropriate computer program 712 comprising computer-executable instructions is downloaded to the storage medium 713 and executed by the processing circuitry 711. The storage medium 713 may also be a computer program product comprising the computer program 712. Alternatively, the computer program 712 may be transferred to the storage medium 713 by means of a suitable computer program product, such as a Digital Versatile Disc (DVD) or a memory stick. As a further alternative, the computer program 712 may be downloaded to the storage medium 713 over a network. The processing circuitry 711 may alternatively be embodied in the form of a digital signal processor (DSP), an application specific integrated circuit (ASIC), a field-programmable gate array (FPGA), a complex programmable logic device (CPLD), etc. The computer system 300 further comprises a communication interface 714 (wired or wireless) over which it is configured to transmit and receive data.

Example 1: A computer-implemented method for wheel spin control in a vehicle comprising a powertrain with at least one electric machine configured to provide propulsion power to a first subset of wheels of the vehicle, the method comprising: estimating, by processing circuitry of a computer system, within a time duration, a vehicle speed based on an effective wheel speed associated with a second subset of wheels of the vehicle, the second subset of wheels subject to less torque variation compared to the first subset of wheels in the time duration, determining, by the processing circuitry, a speed criterion based on the estimated speed and an offset speed, and providing, by the processing circuitry, a control instruction to the electric machine to limit an output torque to the first subset of wheels according to the determined speed criterion.

Example 2: The method according to example 1, wherein the offset speed depends on the present driving conditions.

Example 3: The method according to any of examples 1-2, comprising:

acquiring, by the processing circuitry, an allowable wheel slip amount based on the present driving conditions, and determining, the offset speed based on the allowable wheel slip amount.

Example 4: The method according to any of examples 1-3, wherein the processing circuitry is comprised in one of an inverter of the electric machine or an engine control module connected to the electric machine.

Example 5: The method according to any of examples 1-4, wherein the powertrain comprises an actuator configured to provide propulsion power to the second subset of wheels, wherein the torque responsiveness of the electric machine is larger than the torque responsiveness of the actuator, during the time duration.

Example 6: The method according to example 5, wherein the actuator is an internal combustion engine.

Example 7: The method according to any of examples 5-7, wherein the second subset of wheels is non-propelled in a first driving mode of the vehicle and is propelled by the actuator in a second driving mode of the vehicle.

Example 8: The method according to any of examples 5-7, wherein the torque responsiveness of the actuator is variable depending on a driving mode of the vehicle.

Example 9: The method according to any of examples 1-4, wherein the second subset of wheels is on a non-propelled axle of the vehicle.

Example 10: The method according to any of examples 1-9, comprising: determining, by the processing circuitry, that the vehicle is in an acceleration scenario, wherein the offset speed is set such that the speed criterion allows acceleration of the vehicle during the time duration.

Example 11: The method according to any of examples 1-10, comprising: determining, by the processing circuitry, that the vehicle is in a deceleration scenario, wherein the offset speed is set such that the speed criterion limits the regenerative braking torque on the first subset of wheels.

Example 12: The method according to any of examples 1-11, performed in parallel with operation of a propulsion torque limitation system operating in brake control module based on inertial measurement unit data, wheel speed data, and driving conditions data.

Example 13: The method according to any of examples 1-12, wherein the wheel speed of the second subset of wheels is measured from a wheel speed sensor or determined based on an operating speed of an actuator connected to the second subset of wheels.

Example 14: A computer system for wheel spin control in a vehicle comprising a powertrain with at least one electric machine configured to provide propulsion power to a first subset of wheels of the vehicle, the computer system comprising processing circuitry configured to: estimate, within a time duration, a vehicle speed based on an effective wheel speed associated with a second subset of wheels of the vehicle, the second subset of wheels subject to less torque variation compared to the first subset of wheels in the time duration, determine a speed criterion based on the estimated speed and an offset speed, and provide a control instruction to the electric machine to limit an output torque to the first subset of wheels according to the determined speed criterion.

Example 15: The computer system according to example 14, wherein the offset speed depends on the present driving conditions.

Example 16: The computer system according to any of examples 14-15, the processing circuitry being configured to: acquire an allowable wheel slip amount based on the present driving conditions, and determine the offset speed based on the allowable wheel slip amount.

Example 17: The computer system according to any of examples 14-16, wherein the processing circuitry is comprised in one of an inverter of the electric machine or an engine control module connected to the electric machine.

Example 18: The computer system according to any of examples 14-17, wherein the powertrain comprises an actuator configured to provide propulsion power to the second subset of wheels, wherein the torque responsiveness of the electric machine is higher than the torque responsiveness of the actuator during the time duration.

Example 19: The computer system of example 18, wherein the actuator is an internal combustion engine.

Example 20: The computer system of any of examples 18-19, wherein the axle of the second subset is non-propelled in a first driving mode of the vehicle and is propelled by the actuator in a second driving mode of the vehicle.

Example 21: The computer system of any of examples 18, wherein the torque responsiveness of the actuator is variable depending on a driving mode of the vehicle.

Example 22: The computer system according to any of examples 14-17, wherein the second subset of wheels is on a non-propelled axle of the vehicle.

Example 23: The computer system according to any of examples 18-22, the processing circuitry being configured to: determine that the vehicle is in an acceleration scenario, wherein the offset speed is set such that the speed criterion allows acceleration of the vehicle during the time duration.

Example 24: The computer system according to any of examples 14-23, the processing circuitry being configured to: determine that the vehicle is in a deceleration scenario, wherein the offset speed is set such that the speed criterion limits the regenerative braking torque on the first subset of wheels.

Example 25: The computer system according to any of examples 14-24, operative in parallel with a propulsion torque limitation system operating in a brake control module based on inertial measurement unit data, wheel speed data, and driving conditions data.

Example 26: The computer system according to any of examples 14-25, wherein the wheel speed of the second subset of wheels is measured from a wheel speed sensor or determined based on an operating speed of an actuator connected to the second subset of wheels.

Example 27: A vehicle comprising: a powertrain with an electric machine coupled to a first subset of wheels of the vehicle, a second subset of wheels subject to less torque variation compared to the first subset of wheels, and a computer system according to any one of examples 14-26.

Example 28: A computer program product comprising program code for performing, when executed by the processing circuitry, the method of any of examples 1-13.

Example 29: A non-transitory computer-readable storage medium comprising instructions, which when executed by the processing circuitry, cause the processing circuitry to perform the method of any of examples 1-13.

Various examples have been described. These and other examples are within the scope of the following claims.

## Claims

1. A computer-implemented method for wheel spin control in a vehicle (102) comprising a powertrain (104) with at least one electric machine (106) configured to provide propulsion power to a first subset (108) of wheels (108a,b) of the vehicle, the method comprising:
estimating (S102), by processing circuitry (116) of a computer system (100), within a time duration (120), a vehicle speed (121) based on an effective wheel speed (Ef) associated with a second subset (110) of wheels (110a,b) of the vehicle, the second subset (110) of wheels (110a,b) subject to less torque variation compared to a torque variation of the first subset (108) of wheels (108a,b) in the time duration,
determining (S105), by the processing circuitry (116), a speed criterion (124) based on the estimated vehicle speed (121) and an offset speed (122), and
providing (S106), by the processing circuitry (116), a control instruction (C) to the electric machine (106) to limit an output torque to the first subset (108) of wheels (108a,b) according to the determined speed criterion.

2. The method according to claim 1, wherein the offset speed depends on the present driving conditions.

3. The method according to any of claims 1-2, comprising:
acquiring, by the processing circuitry, an allowable wheel slip amount based on the present driving conditions, and
determining the offset speed based on the allowable wheel slip amount.

4. The method according to any of claims 1-3, wherein the processing circuitry is comprised in one of an inverter of the electric machine or an engine control module connected to the electric machine.

5. The method according to any of claims 1-4, wherein the powertrain comprises an actuator configured to provide propulsion power to the second subset of wheels, wherein the torque responsiveness of the electric machine is larger than the torque responsiveness of the actuator, during the time duration.

6. The method according to claim 5, wherein the actuator is an internal combustion engine.

7. The method according to any of claims 5-7, wherein the second subset of wheels is non-propelled in a first driving mode of the vehicle and is propelled by the actuator in a second driving mode of the vehicle.

8. The method according to any of claims 5-7, wherein the torque responsiveness of the actuator is variable depending on a driving mode of the vehicle.

9. The method according to any of claims 1-4, wherein the second subset of wheels is on a non-propelled axle of the vehicle.

10. The method according to any of claims 1-9, comprising:
determining, by the processing circuitry, that the vehicle is in an acceleration scenario, wherein the offset speed is set such that the speed criterion allows acceleration of the vehicle during the time duration.

11. The method according to any of claims 1-10, comprising:
determining, by the processing circuitry, that the vehicle is in a deceleration scenario, wherein the offset speed is set such that the speed criterion limits the regenerative braking torque on the first subset of wheels.

12. A computer system (100) for wheel spin control in a vehicle comprising a powertrain (104) with at least one electric machine (106) configured to provide propulsion power to a first subset (108) of wheels (108a,b) of the vehicle (102), the computer system comprising processing circuitry (116) configured to:
estimate, within a time duration (120), a vehicle speed (121) based on an effective wheel speed (Ef) associated with a second subset (110) of wheels (110a,b) of the vehicle (102), the second subset (110) of wheels (110a,b) subject to less torque variation compared to the first subset of wheels in the time duration,
determine a speed criterion (124) based on the estimated speed and an offset speed, and
provide a control instruction (C) to the electric machine (106) to limit an output torque to the first subset (108) of wheels (108a,b) according to the determined speed criterion.

13. A vehicle comprising:
a powertrain with an electric machine coupled to a first subset of wheels of the vehicle,
a second subset of wheels subject to less torque variation compared to the first subset of wheels, and
a computer system according to claim 12.

14. A computer program product comprising program code for performing, when executed by the processing circuitry, the method of any of claims 1-11.

15. A non-transitory computer-readable storage medium comprising instructions, which when executed by the processing circuitry, cause the processing circuitry to perform the method of any of claims 1-11.
